(19) Europäisches Patentamt / European Patent Office / Office européen des brevets

(11) **EP 3 050 806 B1**

(12) **FASCICULE DE BREVET EUROPEEN**

(45) Date de publication et mention
de la délivrance du brevet:
**22.03.2017 Bulletin 2017/12**

(51) Int Cl.:
***B64D 31/06*** *(2006.01)* *B64C 27/12* *(2006.01)*
*B64C 27/82* *(2006.01)*

(21) Numéro de dépôt: **16151796.6**

(22) Date de dépôt: **19.01.2016**

(54) **DISPOSITIF DE SURVEILLANCE D'UN SYSTEME DE TRANSMISSION DE PUISSANCE D'UN AERONEF, UN AERONEF MUNI DE CE DISPOSITIF ET LE PROCEDE UTILISE**

VORRICHTUNG ZUR ÜBERWACHUNG DES LEISTUNGSÜBERTRAGUNSSYSTEMS EINES LUFTFAHRZEUGS, MIT DIESER VORRICHTUNG AUSGESTATTETES LUFTFAHRZEUG UND ENTSPRECHENDES VERFAHREN

A DEVICE FOR MONITORING A POWER TRANSMISSION SYSTEM OF AN AIRCRAFT, AN AIRCRAFT PROVIDED WITH THE DEVICE, AND THE METHOD USED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2015 FR 1500166**

(43) Date de publication de la demande:
**03.08.2016 Bulletin 2016/31**

(73) Titulaire: **Airbus Helicopters**
**13725 Marignane Cedex (FR)**

(72) Inventeurs:
• **VALLART, Jean-Baptiste**
**13100 AIX EN PROVENCE (FR)**
• **TAHERI, Setareh**
**13100 AIX EN PROVENCE (FR)**
• **LEYDER, Samuel**
**13880 VELAUX (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 2 749 496    EP-A2- 1 310 646**

**Description**

La présente invention concerne un dispositif de surveillance pour surveiller un système transmission de puissance d'un aéronef, un aéronef muni de ce dispositif de surveillance et le procédé utilisé.

En particulier, l'aéronef est un giravion muni d'un rotor principal assurant au moins partiellement la sustentation voire la propulsion du giravion. Ce giravion comporte en outre au moins un organe auxiliaire permettant le contrôle de son mouvement en lacet.

Notamment, un hélicoptère comporte par exemple un rotor principal et un organe auxiliaire mis en rotation par une installation motrice. Un tel organe auxiliaire est par exemple muni d'un rotor dit « rotor auxiliaire » par la suite.

En outre, l'installation motrice est reliée mécaniquement à chaque rotor par un système de transmission de puissance.

En effet, les hélicoptères sont équipés d'une installation motrice comprenant au moins un moteur. Un tel moteur peut être un turbomoteur à turbine libre par exemple. Chaque moteur est muni d'un arbre de travail effectuant une rotation à haute vitesse. Au contraire, le rotor principal d'un hélicoptère effectue une rotation à une vitesse faible, sensiblement comprise entre 200 et 400 tours par minute. Dès lors, le système de transmission de puissance comporte une boîte de réduction d'une vitesse de rotation qui est interposée entre les moteurs et le rotor principal. Une telle boîte de réduction d'une vitesse de rotation est dénommée « boîte de transmission de puissance principale ».

Par suite, chaque moteur est relié à la boîte de transmission de puissance principale d'un système de transmission de puissance, cette boîte de transmission de puissance principale étant reliée au rotor principal voire aussi au rotor auxiliaire.

En particulier, la boîte de transmission de puissance principale entraîne en rotation un mât rotor. Le mât rotor entraîne alors en rotation le rotor principal.

De plus, la boîte de transmission de puissance principale entraîne en rotation le rotor auxiliaire au travers d'une chaîne de transmission de puissance auxiliaire et d'une boîte de transmission de puissance arrière. Dès lors, la boîte de transmission de puissance arrière est par exemple interposée entre la chaîne de transmission de puissance auxiliaire et le rotor auxiliaire.

L'homme du métier dénomme par l'expression « les ensembles arrières » l'ensemble comprenant la chaîne de transmission de puissance auxiliaire, la boîte de transmission de puissance arrière et le rotor auxiliaire. Cet ensemble est dénommé plus simplement « ensemble auxiliaire » par la suite.

Par ailleurs, afin de garantir l'intégrité mécanique de l'installation motrice, trois paramètres de surveillance des turbomoteurs sont usuellement définis et limités, à savoir la température dite « T4 » des gaz dans la chambre de combustion de chaque turbomoteur, la vitesse de rotation Ng du générateur de gaz de chaque turbomoteur et le couple Tq exercé sur un arbre de travail de chaque turbomoteur relié à la boîte de transmission de puissance principale.

En outre, un constructeur introduit des limites pour protéger en couple l'entrée de la boîte de transmission de puissance principale, le mât rotor et l'ensemble auxiliaire.

Un constructeur tend alors à protéger un système de transmission de puissance en établissant des limites d'un couple exercé sur le mât rotor, d'un couple exercé sur la liaison mécanique reliant les turbomoteurs à la boîte de transmission de puissance principale et d'un couple exercé sur l'ensemble auxiliaire.

Les diverses limites de l'installation motrice et du système de transmission de puissance sont établies pour empêcher les dégradations mécaniques des divers organes concernés.

La limitation la plus contraignante dépend de la phase de vol. De manière générale, à basse altitude à savoir en dessous de 3000 mètres environ et en l'absence de panne d'un moteur, la limitation du couple exercé sur le mât rotor s'avère être la limitation la plus contraignante.

En outre, pour des raisons de coûts et de difficultés d'implémentation d'un couplemètre, seul les moteurs sont généralement équipés d'un tel couplemètre. Chaque moteur comporte ainsi un couplemètre agencé sur son arbre de travail afin de comparer le couple mesuré à une limite de couple intrinsèque du moteur. Un couplemètre est donc utilisé en premier lieu pour éviter que le moteur ne dépasse sa propre limite de couple.

Toutefois, un constructeur peut utiliser le couplemètre de chaque moteur pour aussi surveiller le système de transmission de puissance.

La limite de couple à appliquer sur chaque liaison reliant un moteur à la boîte de transmission de puissance peut ainsi être surveillée en utilisant les mesures de ces couplemètres.

En effet, la puissance développée par un organe tournant ou exercée sur cet organe tournant est égale au couple exercé sur cet organe tournant multiplié par la vitesse de rotation de l'organe tournant.

Par suite et selon un état de la technique, un constructeur détermine la puissance limite pouvant être développée en amont de la boîte de transmission de puissance principale, et en déduit une limite de couple. Cette limite de couple est dénommée « limite de couple d'entrée de boîte » pour être distinguée de la limite de couple intrinsèque de chaque moteur.

Pour déterminer cette puissance limite, la relation de puissance suivante est utilisée:

$$Peng = P1 + P2$$

où « Peng » représente la puissance maximale autorisée pour les moteurs, « P1 » représente la puissance maximale autorisée sur le mât rotor, « P2 » représente la puissance absorbée par l'ensemble auxiliaire.

La puissance absorbée par l'ensemble auxiliaire n'est généralement pas associée à une limite de couple sur cet ensemble auxiliaire en raison des vitesses de rotation très élevées des pièces de cet ensemble auxiliaire.

La puissance maximale autorisée pour les moteurs est définie par les contraintes mécaniques du constructeur de l'aéronef, ces contraintes étant généralement différentes des limites imposées par le motoriste.

La puissance limite applicable sur chaque moteur est obtenue à partir de la puissance maximale autorisée pour les moteurs en fonction d'une répartition de puissance prédéfinie. Par exemple une équirépartition de puissance entre les moteurs d'un giravion bimoteur conduit à définir une puissance limite pour chaque moteur égale à la moitié de la puissance maximale autorisée pour les moteurs.

Cette relation de puissance peut comprendre une variable ajustable pour tenir compte par exemple des pertes de puissance engendrées par le fonctionnement de la boîte de transmission de puissance principale. De même, cette relation peut comprendre une variable ajustable pour tenir compte d'éventuels prélèvements de puissance réalisés sur le système de transmission de puissance pour réaliser des opérations annexes.

En outre, la puissance maximale autorisée sur le mât rotor P1 est une constante de puissance définie par le constructeur.

De plus, en l'absence de mesure de couple sur l'ensemble auxiliaire, le constructeur évalue selon un état de la technique la puissance absorbée par l'ensemble auxiliaire P2 en fonction de la phase de vol.

Ainsi, à basse vitesse, la puissance absorbée par l'ensemble auxiliaire P2 est égale à une première constante. Cette première constante correspond usuellement à une estimation de la puissance absorbée par l'ensemble auxiliaire P2 durant une phase en vol stationnaire, cette phase de vol en stationnaire étant réalisée avec des moteurs fournissant une puissance connue sous l'acronyme « PMD » et l'expression « Puissance Maximale au Décollage ».

Durant une phase de vol de croisière, la puissance absorbée par l'ensemble auxiliaire P2 est égale à une deuxième constante. Cette deuxième constante correspond usuellement à une estimation de la puissance absorbée par l'ensemble auxiliaire P2 lors d'une phase de vol en palier stabilisé, cette phase de vol en palier stabilisé étant réalisée avec des moteurs fournissant une puissance connue sous l'acronyme « PMC » et l'expression « Puissance Maximale en Continu ».

Par conséquent, des équipements de l'aéronef déterminent la phase de vol en cours et en déduisent la puissance absorbée par l'ensemble auxiliaire. Cette puissance absorbée par l'ensemble auxiliaire P2 peut être qualifiée de « puissance forfaitaire » en raison de son mode de détermination.

En réalisant la somme de la puissance maximale consommée par l'ensemble auxiliaire P2 et de la puissance maximale autorisée sur le mât rotor P1, des équipements de l'aéronef déterminent la puissance maximale Peng que peut fournir l'installation motrice pour ne pas endommager le système de transmission de puissance. Dès lors, une limite de couple d'entrée de boîte par moteur est établie en fonction de la vitesse de rotation des organes surveillés, en particulier un arbre de travail de chaque moteur.

Un dispositif de surveillance peut alors afficher cette limite de couple d'entrée de boîte et la mesure du couple courante fournie par un couplemètre d'un moteur.

Ce procédé permet alors de surveiller un système de transmission de puissance à l'aide uniquement des couplemètres des moteurs. Ce procédé présente l'avantage de ne pas nécessiter l'utilisation d'un couplemètre localisé sur l'ensemble auxiliaire ou le mât rotor.

Toutefois, pour les limitations mécaniques du système de transmission de puissance, la limite de couple d'entrée de boîte est donc établie à partir de l'image d'une consommation « forfaitaire » de puissance de l'ensemble auxiliaire.

Cette consommation forfaitaire peut s'avérer peu précise dans des phases de vol particulières, par exemple lors d'un déplacement latéral durant un vol en stationnaire ou en cas de présence d'une rafale de vent de travers.

Cette estimation peu précise de la puissance absorbée par l'ensemble auxiliaire peut alors conduire à des limitations artificielles des performances de l'aéronef, pour garantir le respect des limitations mécaniques dans ces dites phases de vol particulières.

Par exemple, pour lutter contre un vent de travers durant un vol en stationnaire et en fonction du sens de propagation du vent de travers, le vent de travers peut impliquer l'augmentation de la poussée du rotor auxiliaire par rapport à un cas d'équilibre sans vent ayant servi à quantifier forfaitairement la puissance absorbée par l'ensemble auxiliaire.

Par suite, le rotor auxiliaire consomme une puissance supérieure à la puissance forfaitaire ayant servie à établir la puissance maximale autorisée pour les moteurs à l'aide de la relation de puissance. Dès lors, la puissance maximale autorisée pour les moteurs s'avère insuffisante pour obtenir la puissance maximale autorisée dans le mât rotor utilisée dans cette relation de puissance.

Ainsi, la puissance réelle transmise au mât rotor est inférieure à la puissance maximale imposée. Cette situation conduit à une limitation arbitrairement restrictive des performances de l'aéronef dans un cas de vol difficile.

L'arrière plan technologique comporte les documents FR 2278576, FR 2541725 et US 5775090.

Le document FR 2278576 présente un système de commande d'un hélicoptère pourvu de deux rotors de sustentation.

Le document FR 2541725 décrit une installation pour la régulation de la répartition de charge et de la vitesse de rotation d'installations à turbine à gaz.

Le document US 5775090 décrit une méthode de détermination d'un signal de couple pour une turbine à gaz.

Les documents EP 1310646 et EP 2749496 sont aussi connus.

Par suite, la présente invention vise un procédé pour tendre à optimiser la surveillance d'un système de transmission de puissance d'un aéronef, et en particulier d'un aéronef comportant deux rotors entraînés par une boîte de transmission de puissance.

L'invention concerne alors un procédé pour surveiller un système de transmission de puissance d'un aéronef, cet aéronef comportant au moins un rotor principal mis en rotation par le système de transmission de puissance, le système de transmission de puissance comprenant une boîte de transmission de puissance principale reliée au rotor principal par au moins un mât rotor. L'aéronef comporte de plus un ensemble auxiliaire muni d'un rotor auxiliaire et d'un assemblage mécanique du système de transmission de puissance, cet assemblage mécanique reliant mécaniquement le rotor auxiliaire à la boîte de transmission de puissance principale. L'aéronef est aussi muni d'une installation motrice comprenant au moins un moteur mettant en mouvement la boîte de transmission de puissance principale.

Enfin, l'aéronef comporte un moyen de commande pour commander le rotor auxiliaire, tel que par exemple un palonnier.

Selon ce procédé :

- on détermine une loi de puissance fournissant un premier paramètre de puissance dudit ensemble auxiliaire en fonction d'une position dudit moyen de commande, ledit premier paramètre de puissance étant un paramètre de puissance réduit par au moins une variable de réduction,

- on fixe une limite de consigne d'un deuxième paramètre de puissance dudit mât rotor,

- on détermine une valeur dite « valeur intermédiaire » du premier paramètre de puissance correspondant à ladite position courante selon ladite loi de puissance,

- on mesure une valeur dite « valeur actuelle » de chaque variable de réduction,

- on corrige ladite valeur intermédiaire au moins en utilisant chaque valeur actuelle pour obtenir une valeur non réduite dite « valeur calculée »,

- on détermine une valeur dite « valeur limite » d'un paramètre de surveillance de ladite installation motrice à ne pas dépasser, ladite valeur limite étant égale à la somme d'au moins ladite limite de consigne et de ladite valeur calculée.

Par suite, l'invention propose de définir une loi de puissance de l'ensemble auxiliaire par exemple par essais. Durant ces essais, un constructeur peut agencer un couplemètre sur l'ensemble auxiliaire pour déterminer la valeur d'un paramètre de puissance dit « premier paramètre de puissance » en fonction de la position du moyen de commande.

Suivant la variante, le premier paramètre de puissance peut prendre la forme d'un couple ou d'une puissance égale au produit du couple mesuré et d'une vitesse de rotation mesurée d'un élément de l'ensemble auxiliaire.

Par ailleurs, le premier paramètre de puissance faisant l'objet de la loi de puissance est une variable réduite en fonction de diverses variables de réduction. Le premier paramètre de puissance est par exemple réduit à l'aide de variables de réduction relatives à des données anémobarométriques.

En effet, une position donnée du moyen de commande peut correspondre à des niveaux de puissance variés en fonction de paramètres environnementaux susceptibles d'influer sur la puissance absorbée par l'ensemble auxiliaire.

Par suite, ce procédé suggère de prendre en considération ces paramètres environnementaux au travers de variables de réduction. Ces paramètres environnementaux sont dès lors utilisés pour adimensionner au moins partiellement le paramètre de puissance fourni par la loi de puissance.

Ainsi, l'expression « ledit premier paramètre de puissance étant un paramètre de puissance réduit par au moins une variable de réduction » désigne un paramètre de puissance au moins partiellement adimensionné à l'aide de chaque variable de réduction.

L'identification de ces paramètres environnementaux influents repose sur des méthodes de corrélation entre leurs variations propres et les variations de la puissance absorbée par l'ensemble auxiliaire. Par suite, un constructeur effectue des vols d'essais en enregistrant la puissance absorbée par l'ensemble auxiliaire et les valeurs de diverses variables.

Au moins une variable de réduction est éventuellement une variable mesurée par un dispositif anémobarométrique de l'aéronef. Ainsi, au moins une variable de réduction peut être à choisir dans une liste comprenant au moins un des paramètres suivants : une densité relative de l'air, la température et la pression de l'air extérieur, une vitesse d'avancement de l'aéronef, une vitesse verticale de l'aéronef.

On entend par « vitesse d'avancement » la vitesse de l'aéronef selon une direction longitudinale de l'aéronef. La vitesse d'avancement peut être la vitesse air indiquée par exemple.

La « vitesse verticale » représente une vitesse de déplacement de l'aéronef selon la pesanteur.

Le constructeur identifie alors les variables de réduction ayant une influence sur la puissance absorbée par l'ensemble auxiliaire. Le premier paramètre de puissance est au moins partiellement adimensionné à l'aide de ces variables de réduction. Le constructeur élabore de plus la loi de puissance sur la base des résultats d'essais. Cette loi de puissance fournit ainsi un premier paramètre de puissance réduit en fonction d'une variable dépendant de la position d'un moyen de commande contrôlant le rotor auxiliaire.

Durant les vols opérationnels, l'invention propose de mesurer la position courante du moyen de commande. Cette position courante peut être mesurée par des moyens usuels, tels qu'un capteur angulaire ou encore un boîtier connu sous l'expression « boîtier de trim ». Par suite, on entend par « on détermine une position courante » la détermination de la valeur d'un paramètre représentant la position du moyen de commande à un instant donné.

Cette position courante est alors exploitée en étant introduite dans la loi de puissance élaborée pour en déduire une valeur dite « valeur intermédiaire ».

Dès lors, la valeur intermédiaire est un paramètre de puissance réduit.

Par suite, la valeur actuelle de chaque variable de position est mesurée et utilisée pour convertir le premier paramètre de puissance réduit en un paramètre non réduit.

En effet, la valeur intermédiaire est alors au moins corrigée à l'aide de la valeur actuelle de chaque variable de réduction pour obtenir une valeur dite « valeur calculée » d'un paramètre de puissance non réduit. L'expression « au moins corrigée » signifie que la valeur intermédiaire est obligatoirement corrigée à l'aide des valeurs actuelles des variables de réduction, puis éventuellement à l'aide d'une correction annexe suivant le mode de réalisation.

A titre illustratif, le premier paramètre de puissance peut être adimensionné en étant divisé par une densité de l'air.

Selon une méthode, le constructeur établit durant une phase d'essais la puissance absorbée par l'ensemble auxiliaire sur la plage de déplacement du moyen de commande durant un cas de vol standard se produisant dans diverses conditions atmosphériques.

Les résultats de la phase d'essais permettent d'élaborer la loi de puissance donnant un premier paramètre de puissance réduit par la densité relative de l'air.

Lors de l'application du procédé, l'aéronef détermine la valeur actuelle de cette densité relative de l'air et la position courante du moyen de commande.

En introduisant cette position courante dans la loi de puissance, des organes de l'aéronef déterminent une valeur intermédiaire.

La valeur calculée est alors au moins fonction du produit de la valeur intermédiaire et de la valeur actuelle de la densité relative de l'air courante. Selon le mode de réalisation, la valeur calculée est par exemple soit égale à ce produit, soit égale à ce produit corrigée d'une marge de puissance.

Cette valeur calculée est utilisée pour déterminer une valeur limite relative à un paramètre de surveillance de l'installation motrice. Le paramètre de surveillance peut être un couple ou une puissance. Par exemple, la valeur calculée permet de déterminer une puissance totale maximale pouvant être développée par l'installation motrice, cette puissance totale maximale permettant d'élaborer un couple limite à respecter sur un arbre de travail de chaque moteur.

Par conséquent, un état de la technique utilise une puissance forfaitaire uniquement pour déterminer la valeur limite d'un paramètre de puissance limite. L'invention propose un procédé différent pour déterminer cette valeur limite, ce procédé étant basé sur un estimateur utilisant une loi de puissance fonction de la position du moyen de commande et au moins une variable de réduction.

Dès lors, l'invention tend à optimiser la détermination de la valeur limite. En effet, la puissance absorbée par l'ensemble auxiliaire est liée à l'ordre donné par un pilote humain ou automatique à l'aide d'un moyen de commande, et donc à la position du moyen de commande. Par suite, la valeur limite déterminée en appliquant l'invention tend à être plus précise que la valeur limite déterminée uniquement à l'aide d'une puissance forfaitaire.

Ce procédé n'est notamment pas évident dans la mesure où la puissance absorbée par l'ensemble auxiliaire dépend de facteurs variés, notamment de conditions aérologiques.

Ce procédé peut être combiné à l'implémentation de bornes visant à borner les puissances développées par chaque moteur.

L'aéronef peut en effet comprendre un organe de gestion pour chaque moteur, tel qu'un organe connu sous l'acronyme « FADEC » correspondant à l'expression anglaise « Full Authority Digital Engine Control ». L'organe de gestion peut par exemple contrôler le débit de carburant transmis au moteur pour que la puissance développée par chaque moteur ne dépasse pas des limites hautes et/ou basses, au moins pour certains régimes de fonctionnement du moteur.

Ces bornes de puissance peuvent viser à garantir la pilotabilité de l'aéronef lorsqu'un pilote agit sur le pas collectif des pales du rotor principal. Ces bornes peuvent aussi garantir l'intégrité mécanique du système de transmission de puissance et le maintien d'un niveau de performance de l'aéronef en cas de dysfonctionnement du dispositif appliquant l'invention, par exemple un dysfonctionnement du système mesurant la position courante du moyen de commande.

Par exemple, un moteur peut fonctionner pour fournir une puissance maximale en transitoire connue sous l'acronyme PMT, une puissance maximale au décollage connue sous l'acronyme PMD, une puissance maximale en continu connue sous l'acronyme PMC. Un hélicoptère multimoteur peut aussi comprendre au moins une puissance d'urgence utilisée en cas de panne d'un moteur.

Afin de permettre une pilotabilité aisée du pas collectif du rotor principal, de telles bornes peuvent être implémentées pour créer une marge entre la puissance maximale en transitoire PMT et la puissance maximale au décollage PMD, ou la puissance maximale en continu connue PMC suivant la phase de vol.

En outre, la puissance maximale en transitoire PMT peut être bridée par l'organe de gestion avec une borne haute pour ne pas dépasser la puissance d'urgence, et avec une borne basse pour assurer des performances minimales en cas de dysfonctionnement du procédé selon l'invention. De même, une borne inférieure de la puissance maximale en continu connue PMC peut être implémentée.

Ce procédé peut de plus comporter une ou plusieurs des caractéristiques qui suivent.

Ainsi, la limite de consigne utilisée est par exemple une consigne de puissance absorbée par le mât rotor.

Un constructeur peut déterminer de manière usuelle la puissance maximale admissible au niveau du mât rotor. La limite de consigne représente alors cette puissance maximale admissible.

Par ailleurs, la valeur limite peut être :

- soit égale à la somme de ladite limite de consigne et de ladite valeur calculée,

- soit égale à la somme de ladite limite de consigne ainsi que de ladite valeur calculée et d'un prélèvement de puissance prédéterminé.

Dès lors, un constructeur peut optimiser la détermination de la valeur limite en prenant en considération un prélèvement de puissance réalisé notamment sur le système de transmission de puissance. Ce prélèvement de puissance peut par exemple comprendre des pertes de puissance liées au fonctionnement de chaque boîte de transmission de puissance et/ou des prélèvements de puissance effectués pour le fonctionnement d'alternateurs ou de pompes, et/ou des prélèvements de puissance effectués pour le fonctionnement de système de climatisation/chauffage de l'aéronef...

Par ailleurs, la valeur limite peut être exploitée pour déterminer un couple limite par moteur.

Ainsi, lorsque la valeur limite représente une puissance, on exploite cette valeur limite pour obtenir un couple limite par moteur à ne pas dépasser. La valeur limite est ainsi divisée par la vitesse de rotation de l'arbre de travail du moteur pour obtenir ce couple limite.

Sur un aéronef multimoteur, une règle de répartition de puissance entre les moteurs peut être utilisée pour déterminer le couple limite maximal à développer par chaque moteur.

Dès lors :

- on mesure un couple courant développé par chaque moteur,

- on compare ledit couple courant d'un moteur au couple limite associé.

La comparaison peut donner lieu à une exploitation usuelle.

Par exemple, un indicateur affiche le couple limite et le couple courant pour permettre à un pilote de vérifier que le couple courant ne dépasse pas le couple limite.

Un indicateur peut aussi traiter divers paramètres de surveillance et afficher des informations relatives au paramètre de surveillance le plus proche de sa limite et/ou ayant une valeur normalisée la plus élevée.

L'organe de gestion de chaque moteur peut en outre par exemple contrôler le débit de carburant transmis au moteur pour que ledit couple courant ne dépasse pas le couple limite, au moins pour certains régimes de fonctionnement du moteur.

Selon un premier mode de réalisation, la valeur calculée est égale à la valeur intermédiaire corrigée par chaque valeur actuelle.

Dès lors, la valeur intermédiaire est corrigée uniquement en utilisant chaque valeur actuelle pour obtenir la valeur calculée non réduite.

Ce premier mode de réalisation permet d'obtenir une loi de puissance relativement précise.

Pour améliorer la précision et selon un deuxième mode de réalisation, pour déterminer la valeur calculée :

- on détermine une phase de vol courante de l'aéronef,

- on détermine une valeur de puissance forfaitaire en fonction de la phase de vol courante,

- on détermine une valeur de calcul non réduite égale à ladite valeur intermédiaire corrigée par chaque valeur actuelle,

- si ladite valeur de calcul est inférieure à ladite valeur de puissance forfaitaire, ladite valeur calculée est égale à la somme d'une marge de précision prédéterminée et de ladite valeur de calcul, ladite valeur calculée étant bornée par ladite valeur de puissance forfaitaire pour ne pas être supérieure à ladite valeur de puissance forfaitaire,

- si ladite valeur de calcul est supérieure à ladite valeur de puissance forfaitaire, ladite valeur calculée est égale à la différence de ladite valeur de calcul et de ladite marge de précision, ladite valeur calculée étant bornée par ladite valeur de puissance forfaitaire pour ne pas être inférieure à ladite valeur de puissance forfaitaire.

La valeur intermédiaire est alors corrigée à l'aide des variables de réduction et de la marge de précision.

Ce deuxième mode de réalisation consiste à comparer la valeur de calcul non réduite fournie par l'estimateur mis en place par l'invention à une consommation de puissance forfaitaire, par exemple la consommation de puissance forfaitaire utilisée par certains états de l'art.

Ainsi, la valeur de puissance forfaitaire est par exemple égale à une première constante lorsque l'aéronef évolue à une vitesse d'avancement inférieure à un seuil de vitesse prédéterminé, et cette valeur de puissance forfaitaire est égale à une deuxième constante lorsque l'aéronef évolue à une vitesse d'avancement supérieure ou égale au seuil de vitesse prédéterminé.

En dessous de la valeur de puissance forfaitaire, la valeur de calcul obtenue par application de la loi de puissance est surestimée d'une marge de précision pour obtenir la valeur calculée. Cette marge de précision peut correspondre à la moitié d'un intervalle de précision de la loi de puissance, connu suite à l'analyse des essais.

Au-dessus de la valeur de puissance forfaitaire, la valeur de calcul est sous-estimée de la marge de précision pour obtenir la valeur calculée.

Ce deuxième mode de réalisation prend alors en considération l'existence d'une marge de précision de la loi de puissance.

Outre un procédé, l'invention vise un dispositif de surveillance pour surveiller un système de transmission de puissance d'un aéronef, ledit aéronef comportant au moins un rotor principal mis en rotation par ledit système de transmission de puissance, ledit système de transmission de puissance comprenant une boîte de transmission de puissance principale reliée audit rotor principal par au moins un mât rotor, ledit aéronef comportant un ensemble auxiliaire muni d'un rotor auxiliaire et d'un assemblage mécanique dudit système de transmission de puissance, ledit assemblage mécanique reliant mécaniquement ledit rotor auxiliaire à ladite boîte de transmission de puissance principale, ledit aéronef comprenant une installation motrice comprenant au moins un moteur mettant en mouvement ladite boîte de transmission de puissance principale, ledit aéronef comportant un moyen de commande pour commander ledit rotor auxiliaire.

Ce dispositif de surveillance est destiné à appliquer le procédé décrit précédemment. Ce dispositif de surveillance comporte alors une unité de traitement munie d'un moyen de calcul et d'une mémoire, le dispositif de surveillance comportant un système de mesure destiné à mesurer une position courante du moyen de commande, l'unité de traitement étant reliée au système de mesure qui mesure une position courante du moyen de commande, la mémoire mémorisant des instructions ainsi que ladite loi de puissance et ladite limite de consigne, le moyen de calcul exécutant lesdites instructions pour appliquer ledit procédé selon l'invention.

La loi de puissance mémorisée peut prendre la forme d'une loi mathématique, ou d'un tableau de valeurs stocké dans une base de données par exemple.

Le dispositif de surveillance comporte un dispositif anémobarométrique relié à l'unité de traitement.

Ce dispositif de surveillance comporte aussi un couplemètre par moteur mesurant un couple courant sur un arbre s'étendant entre ce moteur et la boîte de transmission de puissance principale.

En outre, le dispositif de surveillance peut comporter un dispositif d'affichage pour afficher une limite fonction de la valeur limite.

Outre un dispositif de surveillance, l'invention vise un aéronef comportant au moins un rotor principal mis en rotation par un système de transmission de puissance, ledit système de transmission de puissance comprenant une boîte de transmission de puissance principale reliée audit rotor principal par au moins un mât rotor, ledit aéronef comportant un ensemble auxiliaire muni d'un rotor auxiliaire et d'un assemblage mécanique dudit système de transmission de puissance, ledit assemblage mécanique reliant mécaniquement ledit rotor auxiliaire à ladite boîte de transmission de puissance principale, ledit aéronef comprenant une installation motrice comprenant au moins un moteur mettant en mouvement ladite boîte de transmission de puissance principale, ledit aéronef comportant un moyen de commande pour commander ledit rotor auxiliaire,

Cet aéronef comporte alors un dispositif de surveillance selon l'invention.

L'invention et ses avantages apparaîtront avec plus de détails dans le cadre de la description qui suit avec des exemples donnés à titre illustratif en référence aux figures annexées qui représentent :

- la figure 1, une vue d'un aéronef selon l'invention,

- les figures 2 et 3, des vues explicitant des systèmes de mesure apte à mesurer une position courante d'un moyen de commande moyen,

- la figure 4, un graphique illustrant le premier mode de réalisation, et

- la figure 5, un graphique illustrant le deuxième mode de réalisation.

Les éléments présents dans plusieurs figures distinctes sont affectés d'une seule et même référence.

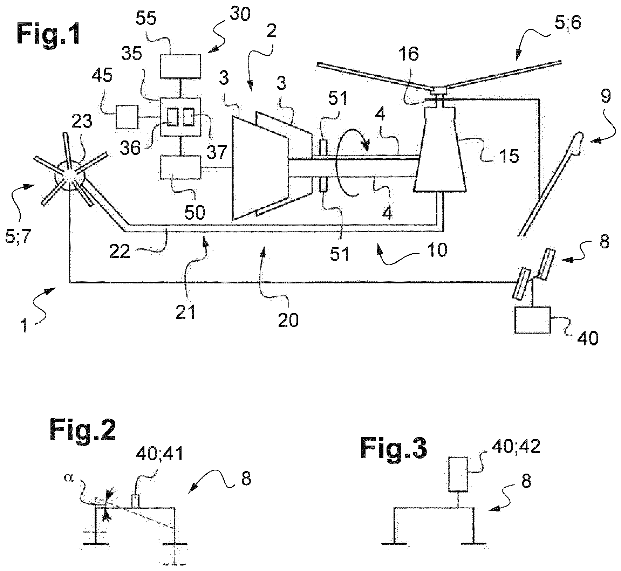

La figure 1 présente un aéronef 1 selon l'invention.

Cet aéronef 1 est muni d'au moins deux rotors 5. En particulier, l'aéronef 1 schématisé présente un rotor principal 6 assurant au moins partiellement la sustentation et la propulsion de cet aéronef 1. De plus, l'aéronef 1 comporte un ensemble auxiliaire 20 muni d'un rotor auxiliaire assurant le contrôle du mouvement en lacet de l'aéronef 1. Par suite, l'aéronef 1 de la figure 1 est un giravion, et plus précisément un hélicoptère.

Un pilote peut contrôler cet aéronef en manoeuvrant des commandes de vol.

Ainsi, l'aéronef 1 comporte des commandes 9 permettant de contrôler le pas des pales du rotor principal cycliquement et / ou collectivement. Par conséquent, ces commandes 9 peuvent par exemple inclure un manche cyclique et un levier collectif respectivement pour le contrôle du pas cyclique et du pas collectif des pales du rotor principal 6.

De plus, l'aéronef 1 comporte un moyen de commande 8 permettant de contrôler le pas des pales du rotor auxiliaire 7. Un tel moyen de commande 8 peut prendre la forme d'un palonnier par exemple.

Pour mettre en mouvement les rotors 5, l'aéronef 1 est muni d'une installation motrice 2. Cette installation motrice comporte au moins un moteur 3, par exemple du type turbomoteur.

Chaque moteur 3 est muni d'un arbre de travail 4 apte à mettre en mouvement un système de transmission de puissance 10 interposé entre l'installation motrice 2 et les rotors 5.

Ce système de transmission de puissance 10 inclut une boîte de transmission de puissance principale 15. La boîte de transmission de puissance principale 15 est mécaniquement reliée à chaque arbre de travail 4 par des liaisons usuelles. De plus, la boîte de puissance principale 15 est mécaniquement reliée à chaque rotor 5.

Dès lors, la boîte de puissance principale 15 met en rotation un mât rotor 16 solidaire du rotor principal 6. Le mât rotor peut être un organe tournant de la boîte de puissance principale 15.

De plus, la boîte de puissance principale 15 est mécaniquement reliée au rotor auxiliaire 7 par un assemblage mécanique 21 dudit système de transmission de puissance 10. L'assemblage mécanique 21 et le rotor auxiliaire forment conjointement un ensemble auxiliaire 20. Cet assemblage mécanique comporte par exemple une chaîne de transmission de puissance auxiliaire 22 usuelle et une boîte de transmission de puissance arrière 23.

Par suite, les moteurs 3 mettent en mouvement la boîte de transmission de puissance principale 15, cette boîte de transmission de puissance principale 15 mettant en mouvement les rotors 5.

L'aéronef 1 comporte en outre un dispositif de surveillance 30 pour surveiller et/ ou contrôler le fonctionnement du système de transmission de puissance 10.

Le dispositif de surveillance 30 comporte une unité de traitement 35 munie d'un moyen de calcul 36 et d'une mémoire 37. Le moyen de calcul 36 peut comporter au moins un processeur ou équivalent. La mémoire peut comprendre une ou plusieurs unités de stockage usuelles. Dès lors, l'unité de traitement peut être une unité connue sous l'acronyme « AFCS » relatif à l'expression anglaise « Aircraft Flight Control System ».

La mémoire 37 contient des instructions pouvant être exécutées par le moyen de calcul 36. De plus, la mémoire 37 contient une loi de puissance et une limite de consigne prédéfinies par le constructeur.

La loi de puissance peut prendre la forme d'au moins une équation mathématique, ou la forme d'un tableau de valeurs par exemple. Cette loi de puissance fournit un premier paramètre de puissance en fonction d'une position du moyen de commande.

Par suite, l'unité de traitement exécute les instructions mémorisées pour appliquer le procédé selon l'invention afin de déterminer une limitation du système de transmission de puissance 10 en fonction notamment de la position du moyen de commande. Cette limitation prend la forme de la valeur d'un paramètre dite « valeur limite Peng ».

Dès lors, l'unité de traitement est reliée par une liaison filaire ou non filaire à un système de mesure 40 qui mesure une position courante POSACTU dudit moyen de commande 8.

Selon la variante de la figure 2, le système de mesure 40 peut comprendre un capteur angulaire mesurant un angle α présent entre une référence et une tige du moyen de commande 8.

Selon la variante de la figure 3, le système de mesure 40 comprend un boîtier de trim 42, un tel boîtier de trim permettant usuellement de déterminer la valeur d'un paramètre relatif à la position du moyen de commande 8.

Par ailleurs, le premier paramètre de puissance est un paramètre réduit par au moins une variable de réduction. Par exemple, une variable de réduction est une donnée anémobarométrique.

Le dispositif de surveillance 30 comporte alors un dispositif anémobarométrique 45 relié à l'unité de traitement 35 par une liaison filaire ou non filaire. Le dispositif anémobarométrique 45 transmet alors des informations relatives à la valeur de diverses variables de réduction. En particulier, le dispositif anémobarométrique 45 transmet à l'unité de traitement des informations permettant de calculer une densité relative de l'air σ, la température et la pression de l'air extérieur, une vitesse d'avancement de l'aéronef, une vitesse verticale de l'aéronef.

De manière complémentaire ou alternative, le dispositif de surveillance comporte un dispositif d'affichage 55 pour afficher une information relative à la valeur limite Peng déterminée par l'unité de traitement 35. On entend par « information relative à la valeur limite » une donnée égale à cette valeur limite, ou une donnée déterminée en utilisant cette valeur limite.

En outre, le dispositif de surveillance 30 comporte un couplemètre 51 par moteur. Chaque couplemètre mesure un couple courant sur un arbre, et notamment un arbre de travail 4 s'étendant entre le moteur 3 et la boîte de transmission de puissance principale 15.

Par exemple, l'unité de traitement communique avec un organe de gestion 50 de chaque moteur, cet organe de gestion 50 étant relié à un couplemètre.

Dès lors, le dispositif de surveillance présente des instruments permettant de déterminer des données dépendant des conditions atmosphériques et du cas de vol. Ces données sont transmises à l'unité de traitement pour l'établissement de la valeur limite Peng.

L'unité de traitement peut comporter un sous-ensemble, par exemple connu sous l'expression anglaise « Vehicle Management System » pour exploiter la valeur limite Peng. Par exemple, l'unité de traitement en déduit un couple limite comparé à un couple courant pour chaque moteur afin d'obtenir une image précise de la marge de puissance disponible. Cette marge de puissance est alors éventuellement transmise par l'unité de traitement au dispositif d'affichage 55 afin de permettre au pilote d'apprécier les limitations en puissance de l'aéronef.

La valeur limiter Peng peut aussi être transmise pour traitement aux organes de gestion 50.

Dès lors, le dispositif de surveillance permet d'appliquer le procédé selon l'invention.

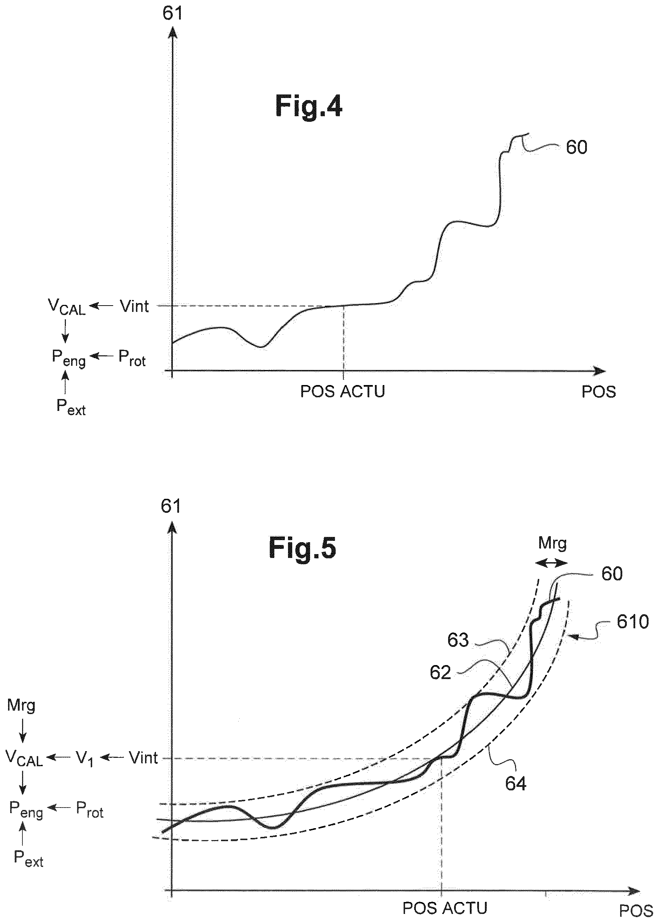

La figure 4 présente un graphique illustrant le premier mode de réalisation.

Quel que soit le mode de réalisation, un constructeur détermine par essais ou simulation une loi de puissance 60 fournissant un premier paramètre de puissance 61 de l'ensemble auxiliaire 20 en fonction d'une position POSACTU du moyen de commande 8.

Pour chaque position possible du moyen de commande 8, l'application de la loi de puissance fournit une unique valeur du premier paramètre de puissance 61.

Ce premier paramètre de puissance est une puissance réduite par au moins une variable de réduction, ou encore un couple éventuellement réduit par au moins une variable de réduction par exemple.

Par exemple, au moins une variable de réduction est une variable mesurée par un dispositif anémobarométrique 45 de l'aéronef. Notamment, au moins une variable de réduction est à choisir dans une liste comprenant une densité relative de l'air σ, la température et la pression de l'air extérieur, une vitesse d'avancement de l'aéronef, une vitesse verticale de l'aéronef.

Par exemple, le premier paramètre de puissance est une puissance divisée par la densité relative de l'air σ.

De plus, le constructeur détermine une limite de consigne Prot d'un deuxième paramètre de puissance représentant la puissance absorbée par le mât rotor 16. A l'instar du premier paramètre de puissance, le deuxième paramètre de puissance peut être une puissance en tant que telle, une puissance réduite par au moins une variable de réduction, ou encore un couple éventuellement réduit par au moins une variable de réduction par exemple. En particulier, la limite de consigne Prot peut être une limite de consigne de puissance absorbée par le mât rotor à ne pas dépasser.

La loi de puissance 60 et la limite de consigne Prot sont mémorisées dans la mémoire 37 de l'unité de traitement 30.

A chaque instant de calcul, l'unité de traitement estime la valeur limite Peng.

Dès lors, l'unité de traitement 30 détermine la position courante POSACTU du moyen de commande 8 à l'aide des données transmises par le système de mesure 40.

Par suite, l'unité de traitement 30 détermine une valeur calculée Vcal. Cette valeur calculée Vcal représente la puissance absorbée par l'ensemble auxiliaire.

Dès lors, l'unité de traitement détermine une valeur intermédiaire Vint en appliquant la position courante POSACTU à la loi de puissance 60.

On entend par « en appliquant la position courante POSACTU à la loi de puissance 60 » que la valeur intermédiaire correspond à la position courante POSACTU selon la loi de puissance 60.

De plus, l'unité de traitement détermine une valeur actuelle Vactu de chaque variable de réduction 65 en utilisant éventuellement les données du dispositif anémobarométrique.

Dès lors, l'unité de traitement convertit la valeur intermédiaire Vint au moins en utilisant chaque valeur actuelle Vactu pour obtenir une valeur calculée non réduite.

Selon le premier mode de réalisation, l'unité de traitement convertit la valeur intermédiaire Vint uniquement en utilisant chaque valeur actuelle Vactu pour obtenir la valeur calculée Vcal.

Selon l'exemple précédent, la densité relative de l'air σ courante est déterminée. La valeur calculée Vcal est alors égale au produit de la valeur intermédiaire Vint et de la densité relative de l'air σ courante.

A partir de cette valeur calculée Vcal, l'unité de traitement détermine la valeur limite Peng de l'installation motrice à ne pas dépasser. Cette valeur limite Peng est en effet égale à la somme d'au moins la limite de consigne Prot et de la valeur calculée Vcal.

Selon une première configuration, la valeur limite Peng est égale à la somme de la limite de consigne Prot et de la valeur calculée Vcal soit : Peng = Prot + Vcal.

Selon une deuxième configuration, la valeur limite Peng est égale à la somme de la limite de consigne Prot ainsi que de la valeur calculée Vcal et de prélèvements de puissance prédéterminés Pext soit : Peng = Prot + Vcal + Pext.

Les prélèvements de puissance prédéterminés Pext sont soit fixés par le constructeur soit déterminés en fonction de données provenant de dispositifs de mesure prévus à cet effet.

Cette deuxième configuration permet d'améliorer la qualité de l'estimation de la valeur limite Peng en considérant la puissance prélevée par divers organes de l'aéronef.

En fonction de la nature de la limite de consigne et de la valeur calculée, la valeur limite peut prendre la forme d'un couple limite.

Toutefois, selon une réalisation la limite de consigne et la valeur calculée représentent des puissances.

Dès lors, l'unité de traitement exploite la valeur limite Peng pour obtenir un couple limite Tqlim par moteur à ne pas dépasser.

Sur un aéronef monomoteur, le couple limite Tqlim est obtenu en divisant la valeur limite Peng par la vitesse de rotation de l'arbre de travail 4 du moteur.

Sur un aéronef multimoteur, l'unité de traitement détermine une puissance limite par moteur pour que l'installation motrice génère la valeur limite, puis en déduise un couple limite par moteur.

Ces couples limites sont alors exploités par les équipements l'aéronef selon des procédés éventuellement usuels, et par exemple par les organes de gestion 50.

Par exemple, l'unité de traitement détermine un couple courant Tqactu développé par chaque moteur 3 à partir des données des couplemètres 51, puis compare le couple courant Tqactu de chaque moteur au couple limite Tqlim associé. L'unité de traitement détermine ainsi une marge de couple transmise au dispositif d'affichage 55 voire aux organes de gestion 50 et à l'unité de traitement 36 pour traitement.

Selon le premier mode de réalisation de la figure 4, la valeur calculée Vcal est donc directement obtenue en convertissant la valeur intermédiaire Vint en un paramètre non réduit avec les valeurs courantes des variables de réduction.

Selon le deuxième mode de réalisation de la figure 5, la loi de puissance 60 est plus ou moins précise. Cette loi de puissance 60 est ainsi comprise dans une enveloppe 610. L'enveloppe 610 prend la forme d'un intervalle arqué centré sur une courbe moyenne 62. La courbe moyenne peut correspondre aux données obtenues avec un couplemètre par exemple lors d'essais.

Par suite, le constructeur établit alors une marge de précision Mrg correspondant à la moitié de l'intervalle de précision de l'enveloppe 610, et donc à la distance séparant la courbe moyenne 62 d'une limite supérieure 63 ou inférieure 64 de l'enveloppe 610.

De plus, le constructeur établit une valeur de puissance forfaitaire Vforf variant en fonction de la phase de vol. Cette valeur de puissance forfaitaire Vforf est mémorisée dans la mémoire 37.

Par exemple, la valeur de puissance forfaitaire Vforf est égale à une première constante lorsque l'aéronef évolue à une vitesse d'avancement inférieure à un seuil de vitesse prédéterminé. La valeur de puissance forfaitaire Vforf est alors égale à une deuxième constante lorsque l'aéronef évolue à une vitesse d'avancement supérieure ou égale au seuil de vitesse prédéterminé.

Dès lors, l'unité de traitement 30 détermine la phase de vol courante de l'aéronef 1 en consultant par exemple le dispositif anémobarométrique 45. Cette unité de traitement en déduit la valeur de puissance forfaitaire Vforf correspondant à la phase de vol courante.

Par ailleurs, l'unité de traitement détermine la valeur intermédiaire Vint correspondant à la position courante POSACTU au travers de la loi de puissance 60.

Dès lors, l'unité de traitement détermine une valeur de calcul V1 non réduite égale à ladite valeur intermédiaire Vint corrigée par chaque valeur actuelle

Si la valeur de calcul V1 déterminée est inférieure à la valeur de puissance forfaitaire Vforf, alors l'unité de traitement ajoute la marge de précision Mrg à la valeur de calcul V1 pour obtenir la valeur calculée Vcal.

Cette valeur calculée Vcal est en outre bornée par une borne supérieure égale la valeur de puissance forfaitaire Vforf courante. Par suite, si la somme de la marge de précision Mrg est de la valeur de calcul V1 est supérieure à valeur de puissance forfaitaire Vforf courante, la valeur calculée Vcal est égale à ladite valeur de puissance forfaitaire Vforf. Dans la négative, la valeur calculée Vcal est égale à cette somme.

Si la valeur de calcul V1 déterminée est supérieure à la valeur de puissance forfaitaire Vforf, l'unité de traitement soustrait la marge de précision Mrg à la valeur de calcul V1 pour obtenir la valeur calculée Vcal.

Cette valeur calculée Vcal est en outre bornée par une borne inférieure égale la valeur de puissance forfaitaire Vforf courante. Par suite, si la différence de la valeur de calcul V1 et de la marge de précision Mrg est inférieure à valeur de puissance forfaitaire Vforf courante, la valeur calculée Vcal est égale à ladite valeur de puissance forfaitaire Vforf. Dans la négative, la valeur calculée Vcal est égale à cette différence.

Ce procédé revient à établir une courbe estimée.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé pour surveiller un système de transmission de puissance (10) d'un aéronef (1), ledit aéronef (1) comportant au moins un rotor principal (6) mis en rotation par ledit système de transmission de puissance (10), ledit système de transmission de puissance (10) comprenant une boîte de transmission de puissance principale (15) reliée audit rotor principal (6) par au moins un mât rotor (16), ledit aéronef (1) comportant un ensemble auxiliaire (20) muni d'un rotor auxiliaire (7) et d'un assemblage mécanique (21) dudit système de transmission de puissance (10), ledit assemblage mécanique (21) reliant mécaniquement ledit rotor auxiliaire (7) à ladite boîte de transmission de puissance principale (15), ledit aéronef (1) comprenant une installation motrice (2) comprenant au moins un moteur (3) mettant en mouvement ladite boîte de transmission de puissance principale (15), ledit aéronef (1) comportant un moyen de commande (8) pour commander ledit rotor auxiliaire (7),
**caractérisé en ce que** :

- on détermine une loi de puissance (60) fournissant un premier paramètre de puissance (61) dudit ensemble auxiliaire (20) en fonction d'une position (POSACTU) dudit moyen de commande (8), ledit premier paramètre de puissance étant un paramètre de puissance réduit en étant adimensionné au moins partiellement par au moins une variable de réduction,
- on fixe une limite de consigne (Prot) d'un deuxième paramètre de puissance dudit mât rotor (16),
- on détermine une position courante (POSACTU) du moyen de commande (8),
- on détermine une valeur réduite dite « valeur intermédiaire (Vint) » dudit premier paramètre de puissance selon ladite loi de puissance (60), la valeur intermédiaire (Vint) correspondant à ladite position courante (POSACTU),
- on mesure une valeur dite « valeur actuelle (Vactu) » de chaque variable de réduction (65),
- on corrige ladite valeur intermédiaire (Vint) au moins en utilisant chaque valeur actuelle (Vactu) pour obtenir une valeur non réduite dite « valeur calculée (Vcal) »,
- on détermine une valeur dite « valeur limite (Peng) » d'un paramètre de surveillance de ladite installation motrice à ne pas dépasser, ladite valeur limite (Peng) étant égale à la somme d'au moins ladite limite de consigne (Prot) et de ladite valeur calculée (Vcal).

2. Procédé selon la revendication 1,
**caractérisé en ce que** ladite limite de consigne (Prot) est une limite de puissance autorisée sur le ledit mât rotor.

3. Procédé selon l'une quelconque des revendications 1 à 2,
**caractérisé en ce que** ladite valeur limite est :

- soit égale à la somme de ladite limite de consigne (Prot) et de ladite valeur calculée (Vcal),
- soit égale à la somme de ladite limite de consigne (Prot) ainsi que de ladite valeur calculée (Vcal) et d'un prélèvement de puissance prédéterminé (Pext).

4. Procédé selon l'une quelconque des revendications 1 à 3 **caractérisé en ce que**, ladite valeur limite étant une puissance, on exploite ladite valeur limite (Peng) pour obtenir un couple limite (Tqlim) par moteur à ne pas dépasser.

5. Procédé selon la revendication 4,
**caractérisé en ce que** :

- on mesure un couple courant (Tqactu) développé par chaque moteur (3),
- on compare ledit couple courant (Tqactu) d'un moteur au couple limite (Tqlim) associé.

6. Procédé selon l'une quelconque des revendications 1 à 5,
**caractérisé en ce que** qu'au moins une variable de réduction est une variable mesurée par un dispositif anémobarométrique (45) de l'aéronef.

7. Procédé selon la revendication 6,
**caractérisé en ce qu'**au moins une variable de réduction est à choisir dans une liste comprenant au moins un des paramètres suivants : une densité relative de l'air ($\sigma$), la température et la pression de l'air extérieur, une vitesse d'avancement de l'aéronef, une vitesse verticale de l'aéronef.

8. Procédé selon l'une quelconque des revendications 1 à 7,
**caractérisé en ce que** ladite valeur calculée est égale à ladite valeur intermédiaire (Vint) corrigée par chaque valeur actuelle.

9. Procédé selon l'une quelconque des revendications 1 à 7,
**caractérisé en ce que** pour déterminer la valeur calculée (Vcal) :

- on détermine une phase de vol courante de l'aéronef (1),
- on détermine une valeur de puissance forfaitaire (Vforf) en fonction de la phase de vol courante,
- on détermine une valeur de calcul non réduite égale à ladite valeur intermédiaire (Vint) corrigée par chaque valeur actuelle,
- si ladite valeur de calcul est inférieure à ladite valeur de puissance forfaitaire (Vforf), ladite valeur calculée (Vcal) est égale à la somme d'une marge de précision (Mrg) prédéterminée et de ladite valeur de calcul, ladite valeur calculée (Vcal) étant bornée par ladite valeur de puissance forfaitaire (Vforf) pour ne pas être supérieure à ladite valeur de puissance forfaitaire (Vforf),
- si ladite valeur de calcul est supérieure à ladite valeur de puissance forfaitaire (Vforf), ladite valeur calculée (Vcal) est égale à la différence de ladite valeur de calcul et de ladite marge de précision (Mrg), ladite valeur de calcul étant bornée par ladite valeur de puissance forfaitaire (Vforf) pour ne pas être inférieure à ladite valeur de puissance forfaitaire (Vforf).

10. Procédé selon la revendication 9,
**caractérisé en ce que** ladite valeur de puissance forfaitaire (Vforf) est égale à une première constante lorsque l'aéronef évolue à une vitesse d'avancement inférieure à un seuil de vitesse prédéterminé, et ladite valeur de puissance forfaitaire (Vforf) est égale à une deuxième constante lorsque l'aéronef évolue à une vitesse d'avancement supérieure ou égale au seuil de vitesse prédéterminé.

11. Dispositif de surveillance (30) pour surveiller un système de transmission de puissance (10) d'un aéronef (1), ledit aéronef (1) comportant au moins un rotor principal (6) mis en rotation par ledit système de transmission de puissance (10), ledit système de transmission de puissance (10) comprenant une boîte de transmission de puissance principale (15) reliée audit rotor principal (6) par au moins un mât rotor (16), ledit aéronef (1) comportant un ensemble auxiliaire (20) muni d'un rotor auxiliaire (7) et d'un assemblage mécanique (21) dudit système de transmission de puissance (10), ledit assemblage mécanique (21) reliant mécaniquement ledit rotor auxiliaire (7) à ladite boîte de transmission de puissance principale (15), ledit aéronef (1) comprenant une installation motrice (2) comprenant au moins un moteur (3) mettant en mouvement ladite boîte de transmission de puissance principale (15), ledit aéronef (1) comportant un moyen de commande (8) pour commander ledit rotor auxiliaire (7),
**caractérisé en ce que** ledit dispositif de surveillance (30) est configuré à appliquer le procédé selon l'une quelconque des revendications 1 à 10, ledit dispositif de surveillance (30) comporte une unité de traitement (35) munie d'un moyen de calcul (36) et d'une mémoire (37), ladite mémoire (37) mémorisant des instructions ainsi que ladite loi de puissance et ladite limite de consigne, ledit dispositif de surveillance (30) comportant un système de mesure (40) configuré à mesurer une position courante (POSACTU) dudit moyen de commande (8), ladite unité de traitement (35) étant reliée au système de mesure (40), ledit moyen de calcul (36) exécutant lesdites instructions pour appliquer ledit procédé selon l'une quelconque des revendications 1 à 10, ledit dispositif de surveillance (30) comportant un dispositif anémobarométrique (45) relié à l'unité de traitement (35) et configuré à mesurer ladite au moins une variable de réduction.

12. Dispositif selon la revendication 11,
**caractérisé en ce que** ledit dispositif de surveillance (30) comporte un couplemètre (51) par moteur mesurant un couple courant sur un arbre (4) s'étendant entre ledit moteur (3) et ladite boîte de transmission de puissance principale (15).

13. Dispositif selon l'une quelconque des revendications 11 à 12,
**caractérisé en ce que** ledit dispositif de surveillance comporte un dispositif d'affichage (55) pour afficher une limite fonction de ladite valeur limite.

14. Aéronef (1) comportant au moins un rotor principal (6) mis en rotation par un système de transmission de puissance (10), ledit système de transmission de puissance (10) comprenant une boîte de transmission de puissance principale (15) reliée audit rotor principal (6) par au moins un mât rotor (16), ledit aéronef (1) comportant un ensemble auxiliaire (20) muni d'un rotor auxiliaire (7) et d'un assemblage mécanique (21) dudit système de transmission de puissance (10), ledit assemblage mécanique (21) reliant mécaniquement ledit rotor auxiliaire (7) à ladite boîte de transmission de puissance principale (15), ledit aéronef (1) comprenant une installation motrice (2) comprenant au moins un moteur (3) mettant en mouvement ladite boîte de transmission de puissance principale (15), ledit aéronef (1) comportant un moyen de commande (8) pour commander ledit rotor auxiliaire (7),
**caractérisé en ce que** ledit aéronef (1) comporte un dispositif de surveillance selon l'une quelconque des revendications 11 à 13.

**Patentansprüche**

1. Verfahren zur Überwachung eines Leistungsübertragungssystems (10) eines Flugzeugs (1), wobei das Flugzeug (1) mindestens einen Hauptrotor (6) aufweist, der von dem Leistungsübertragungssystem (10) in Rotation versetzt wird, wobei das Leistungsübertragungssys-tem (10) ein Hauptleistungsgetriebe (15) aufweist, das über mindestens einen Rotorwelle (16) mit dem Hauptrotor (6) verbunden ist, wobei das Flugzeug (1) eine Hilfseinheit (20) aufweist, die mit einem Hilfsrotor (7) und einer mechanischen Verbindung (21) des Leistungsübertragungssystem (10) versehen ist, wobei die mechanische Verbindung (21) den Hilfsrotor (7) mit dem Hauptleistungsgetriebe (15) verbindet, wobei das Flugzeug (1) eine Antriebseinheit (2) aufweist mit mindestens einem Motor (3), der das Hauptleistungsgetriebe (15) in Bewegung versetzt, wobei das Flugzeug (1) Steuermittel (8) aufweist zum Steuern des Hilfsrotors (7),
**dadurch gekennzeichnet, dass**

- man eine Leistungsregel (60) bestimmt, die einen ersten Leistungsparameter (61) der Hilfseinheit (20) in Abhängigkeit von einer Position (POSACTU) des Steuermittels (8) liefert, wobei der erste Leistungsparameter ein reduzierter Leistungsparameter ist, der zumindest teilweise durch mindestens eine Reduktionsvariable verkleinert ist,
- man einen Grenzsollwert (Prot) eines zweiten Leistungsparameters der Rotorwelle (16) festlegt,
- man eine aktuelle Lage (POSACTU) des Steuermittels (8) bestimmt,
- man einen"Zwischenwert (Vint)" genannter reduzierter Wert gemäß der Leistungsregel (60) bestimmt, wobei der Zwischenwert (Vint) der aktuellen Lage (POSACTU) entspricht,
- man einen "aktueller Wert (Vactu)" genannten Wert jeder Reduktionsvariablen (65) misst,
- man den Zwischenwert (Vint) mindestens durch die Verwendung jedes aktuellen Werts (Vactu) korrigiert, um einen "berechneter Wert (Vcal)" genannten nicht reduzierten Wert zu erhalten,
- man einen "Grenzwert (Peng)" genannten Wert eines Überwachungsparameters der Antriebseinheit bestimmt, der nicht überschritten werden darf, wobei der Grenzwert (Peng) gleich der Summe aus mindestens dem Grenzsollwert (Prot) und dem berechneten Wert (Vcal) ist.

**2.** Verfahren nach Anspruch 1,
**dadurch gekennzeichnet, dass** der Grenzsollwert (Prot) ein Leistungsgrenzwert ist, der für die Rotorwelle zugelassen ist.

**3.** Verfahren nach einem der Ansprüche 1 bis 2,
**dadurch gekennzeichnet, dass** der Grenzweft:

- entweder gleich der Summe aus dem Grenzsollwert (Prot) und dem berechneten Wert (Vcal) ist,
- oder gleich der Summe aus dem Grenzsollwert (Prot) sowie dem berechneten Wert (Vcal) und einem vorbestimmten Leistungsabzug (Pext) ist.

**4.** Verfahren nach einem der Ansprüche 1 bis 3,
**dadurch gekennzeichnet, dass** der Grenzwert eine Leistung ist, wobei man den Grenzwert (Peng) dazu verwendet, einen DrehmomentGrenzwert (Tqlim) pro Motor zu erhalten, der nicht überschritten werden darf.

**5.** Verfahren nach Anspruch 4,
**dadurch gekennzeichnet, dass**:

- man ein aktuelles Drehmoment (Tqactu) misst, das von jedem Motor (3) entwickelt wird,
- man das aktuelle Drehmoment (Tqactu) eines Motors mit einem zugehörigen Drehmomentgrenzwert (Tqlim) vergleicht.

**6.** Verfahren nach einem der Ansprüche 1 bis 5,

**dadurch gekennzeichnet, dass** mindestens eine Reduktionsvariable eine von einer Flugdatenrechenanlage (45) des Flugzeugs gemessene Variable ist.

**7.** Verfahren nach Anspruch 6,
**dadurch gekennzeichnet, dass** mindestens eine Reduktionsvariable aus einer Liste zu wählen ist, die mindestens einen der folgenden Parameter aufweist: eine relative Luftdichte ($\sigma$), die Temperatur und den Druck der Umgebungsluft, eine Vortriebsgeschwindigkeit des Flugzeugs, eine vertikale Geschwindigkeit des Flugzeugs.

**8.** Verfahren nach einem der Ansprüche 1 bis 7,
**dadurch gekennzeichnet, dass** der berechnete Wert gleich dem durch jeden aktuellen Wert korrigierten Zwischenwert (Vint) ist.

**9.** Verfahren nach einem der Ansprüche 1 bis 7,
**dadurch gekennzeichnet, dass**, um den berechneten Wert (Vcal) zu bestimmen:

- man eine aktuelle Flugphase des Flugzeugs (1) bestimmt,
- man einen Pauschalleistungswert (Vforf in Abhängigkeit von der aktuellen Flugphase bestimmt,
- man einen nicht reduzierten Berechnungswert bestimmt, der gleich dem Zwischenwert (Vint), korrigiert durch jeden aktuellen Wert, ist,
- wobei, wenn der Berechnungswert kleiner als der Pauschalleistungswert (Vforf) ist, der berechnete Wert (Vcal) gleich der Summe aus einem vorbestimmten Messgenauigkeitsbereich (Mrg) und dem Berechnungswert ist, wobei der berechnete Wert (Vcal) durch den Pauschalleistungswert (Vforf begrenzt ist, um nicht größer zu sein als der Pauschalleistungswert (Vforf),
- wobei, wenn der Berechnungswert größer als der Pauschalleistungswert (Vforf ist, der berechnete Wert (Vcal) gleich der Differenz aus dem Berechnungswert und dem Messgenauigkeitsbereich (Mrg) ist, wobei der Berechnungswert durch den Pauschalleistungswert (Vforf) begrenzt ist, um nicht kleiner zu sein als der Pauschalleistungswert (Vforf).

**10.** Verfahren nach Anspruch 9,
**dadurch gekennzeichnet, dass** der Pauschalleistungswert (Vforf) gleich einer ersten Konstante ist, wenn das Flugzeug mit einer Vortriebsgeschwindigkeit fliegt, die kleiner als ein vorbstimmter Geschwindigkeitsschwellenwert ist, und der Pauschalleistungswert (Vforf) gleich einer zweiten Konstante ist, wenn das Flugzeug mit einer Vortriebsgeschwindigkeit fliegt, die größer oder gleich dem vorbestimmten Geschwindigkeitsschwellenwert ist.

**11.** Überwachungsvorrichtung (30) zum Überwachen eines Leistungsübertragungssystems (10) eines Flugzeugs (1), wobei das Flugzeug (1) mindestens einen Hauptrotor (6) aufweist, der von dem Leistungsübertragungssystem (10) in Rotation versetzt wird, wobei das Leistungsübertragungssystem (10) ein Hauptleistungsgetriebe (15) aufweist, das mit dem Hauptrotor (6) über mindestens eine Rotorwelle (16) verbunden ist, wobei das Flugzeug (1) eine Hilfseinheit (20) aufweist, die mit einem Hilfsrotor (7) und einer mechanischen Verbindung (21) des Leistungsübertragungssystems (10) versehen ist, wobei die mechanische Verbindung (21) den Hilfsrotor (7) mit dem Hauptleistungsgetriebe (15) verbindet, wobei das Flugzeug (1) eine Antriebseinheit (2) mit mindestens einem Motor (3) aufweist, der das Hauptleistungsgetriebe (15) in Bewegung versetzt, wobei das Flugzeug (1) ein Steuermittel (8) aufweist zum Steuern des Hilfsrotors (7),

**dadurch gekennzeichnet, dass** die Überwachungsvorrichtung (30) ausgebildet ist, um das Verfahren nach einem der Ansprüche 1 bis 10 auszuführen, wobei die Überwachungsvorrichtung (30) eine Verarbeitungseinheit (35) aufweist mit einem Rechenmittel (36) und einem Speicher (37), wobei der Speicher (37) Befehle sowie die Leistungsregel und den Grenzsollwert speichert, wobei die Überwachungsvorrichtung (30) ein Messsystem (40) aufweist, das ausgebildet ist, um eine aktuelle Position (POSACTU) des Steuermittels (8) zu messen, wobei die Verarbeitungseinheit (35) mit dem Messsystem (40) verbunden ist, wobei das Rechenmittel (36) die Befehle ausführt, um das Verfahren nach einem der Ansprüche 1 bis 10 durchzuführen, wobei die Überwachungsvorrichtung (30) einen Flugdatenrechner (45) aufweist, der mit der Verarbeitungseinheit (35) verbunden ist und der ausgebildet ist, um die mindestens eine Reduktionsvariable zu messen.

**12.** Vorrichtung nach Anspruch 11,
**dadurch gekennzeichnet, dass** die Überwachungsvorrichtung (30) einen Drehmomentmesser (51) pro Motor aufweist, der ein aktuelles Drehmoment an einer Welle (4) misst, die sich zwischen dem Motor (3) und dem Hauptleistungsgetriebe (15) erstreckt.

**13.** Vorrichtung nach einem der Ansprüche 11 bis 12,
**dadurch gekennzeichnet, dass** die Überwachungsvorrichtung eine Anzeigevorrichtung (55) aufweist zum Anzeigen einer Grenze, die von dem Grenzwert abhängt.

**14.** Flugzeug (1) mit mindestens einem Hauptrotor (6), der durch ein Leistungsübertragungssystem (10) in Rotation versetzt wird, wobei das Leistungsübertragungssystem (10) ein Hauptleistungsgetriebe (15) aufweist, das mit dem Hauptrotor (6) über mindestens eine Rotorwelle (16) verbunden ist, wobei das Flugzeug (1) eine Hilfseinheit (20) aufweist, die mit einem Hilfsrotor (7) und einer mechanischen Verbindung (21) des Leistungsübertragungssystems (10) versehen ist, wobei die mechanische Verbindung (21) den Hilfsrotor (7) mechanisch mit dem Hauptleistungsgetriebe (15) verbindet, wobei das Flugzeug (1) eine Antriebseinheit (2) aufweist mit mindestens einem Motor (3), der das Hauptleistungsgetriebe (15) in Bewegung versetzt, wobei das Flugzeug (1) ein Steuermittel (8) aufweist zum Steuern des Hilfsrotors (7),

**dadurch gekennzeichnet, dass** das Flugzeug (1) eine Überwachungsvorrichtung nach einem der Ansprüche 11 bis 13 aufweist.

**Claims**

**1.** Method for monitoring a power transmission system (10) of an aircraft (1), said aircraft (1) comprising at least one main rotor (6) driven in rotation by said power transmission system (10), said power transmission system (10) comprising a main power transmission gearbox (15) connected to said main rotor (6) by at least one rotor mast (16), said aircraft (1) comprising an auxiliary unit (20) provided with an auxiliary rotor (7) and a mechanical assembly (21) of said power transmission system (10), said mechanical assembly (21) mechanically connecting said auxiliary rotor (7) to said main power transmission gearbox (15), said aircraft (1) comprising a power plant (2) comprising at least one engine (3) driving said main power transmission gearbox (15), said aircraft (1) comprising a control means (8) for controlling said auxiliary rotor (7),

**characterised in that**:

- a power relationship (60) providing a first power parameter (61) of said auxiliary unit (20) as a function of a position (POSACTU) of said control means (8) is determined, said first power parameter being a power parameter reduced by being dimensionless at least in part by at least one reduction variable,
- a setpoint limit (Prot) of a second power parameter of said rotor mast (16) is set,
- a current position (POSACTU) of the control means (8) is determined,
- a reduced value referred to as an "intermediate value (Vint)" of said first power parameter is determined according to said power relationship (60), the intermediate value (Vint) corresponding to said current position (POSACTU),
- a value referred to as a "current value (Vactu)" of each reduction variable (65) is measured,
- said intermediate value (Vint) is corrected at least by using each current value (Vactu) in order to obtain a non-reduced value referred to as a "calculated value (Vcal)",
- a value referred as a "limit value (Peng)" of a monitoring parameter of said power plant not to be exceeded is determined, said limit value (Peng) being equal to the sum of at least said setpoint limit (Prot) and said calculated value (Vcal) .

2. Method according to claim 1, **characterised in that** said setpoint limit (Prot) is an authorised power limit on said rotor mast.

3. Method according to any one of claims 1 to 2, **characterised in that** said limit value is:

   - either equal to the sum of said setpoint limit (Prot) and said calculated value (Vcal),
   - or equal to the sum of said setpoint limit (Prot) and also said calculated value (Vcal) and a predetermined power drawing (Pext) .

4. Method according to any one of claims 1 to 3, **characterised in that**, said limit value being a power, said limit value (Peng) is used to obtain a limit torque (Tqlim) per engine not to be exceeded.

5. Method according to claim 4, **characterised in that**:

   - a current torque (Tqactu) developed by each engine (3) is measured,
   - said current torque (Tqactu) of an engine is compared with the associated limit torque (Tqlim).

6. Method according to any one of claims 1 to 5, **characterised in that** at least one reduction variable is a variable measured by an anemobarometric device (45) of the aircraft.

7. Method according to claim 6, **characterised in that** at least one reduction variable is to be chosen from a list comprising at least one of the following parameters: a relative density of the air (σ), the temperature and the pressure of the outside air, a speed of advance of the aircraft, a vertical speed of the aircraft.

8. Method according to any one of claims 1 to 7, **characterised in that** said calculated value is equal to said intermediate value (Vint) corrected by each current value.

9. Method according to any one of claims 1 to 7, **characterised in that** in order to determine the calculated value (Vcal):

- a current flight phase of the aircraft (1) is determined,
- a standard power value (Vforf) as a function of the current flight stage is determined,
- a non-reduced calculation value equal to said intermediate value (Vint) corrected by each current value is determined,
- if said calculation value is less than said standard power value (Vforf), said calculated value (Vcal) is equal to the sum of a predetermined accuracy margin (Mrg) and said calculation value, said calculated value (Vcal) being bounded by said standard power value (Vforf) in order to be no greater than said standard power value (Vforf),
- if said calculation value is greater than said standard power value (Vforf), said calculated value (Vcal) is equal to the difference of said calculation value and said accuracy margin (Mrg), said calculated value being bounded by said standard power value (Vforf) in order to be no less than said standard power value (Vforf).

10. Method according to claim 9, **characterised in that** said standard power value (Vforf) is equal to a first constant while the aircraft is flying at a speed of advance less than a predetermined speed threshold, and said standard power value (Vforf) is equal to a second constant while the aircraft is flying at a speed of advance greater than or equal to said predetermined speed threshold.

11. Monitoring device (30) for monitoring a power transmission system (10) of an aircraft (1), said aircraft (1) comprising at least one main rotor (6) driven in rotation by said power transmission system (10), said power transmission system (10) comprising a main power transmission gearbox (15) connected to said main rotor (6) by at least one rotor mast (16), said aircraft (1) comprising an auxiliary unit (20) provided with an auxiliary rotor (7) and a mechanical assembly (21) of said power transmission system (10), said mechanical assembly (21) mechanically connecting said auxiliary rotor (7) to said main power transmission gearbox (15), said aircraft (1) comprising a power plant (2) comprising at least one engine (3) driving said main power transmission gearbox (15), said aircraft (1) comprising a control means (8) for controlling said auxiliary rotor (7), **characterised in that** said monitoring device (30) is configured to apply the method according to any one of claims 1 to 10, said monitoring device (30) comprising a processing unit (35) provided with a calculation means (36) and a memory (37), said memory (37) storing instructions and also said power relationship and said setpoint limit, said monitoring device (30) comprising a measurement system (40) configured to measure a current position (POSACTU) of said control means (8), said processing unit (35) being connected to the measurement system (40), said calculation means (36) executing said instructions in order to apply said method according to any one of claims 1 to 10, said monitoring device (30) comprising an anemobarometric device (45) connected to the processing unit (35) and configured to measure said at least one reduction variable.

12. Device according to claim 11,
    **characterised in that** said monitoring device (30) comprises one torque meter per engine measuring a current torque on a shaft (4) extending between said engine and said main power transmission gearbox (15).

13. Device according to any one of claims 11 to 12,
    **characterised in that** said monitoring device comprises a display device (55) for displaying a limit which is a function of said limit value.

14. Aircraft (1) comprising at least one main rotor (6) driven in rotation by a power transmission system (10), said power transmission system (10) comprising a main power transmission gearbox (15) connected to said main rotor (6) by at least one rotor mast (16), said aircraft (1) comprising an auxiliary unit (20) provided with an auxiliary rotor (7) and a mechanical assembly (21) of said power transmission system (10), said mechanical assembly (21) mechanically connecting said auxiliary rotor (7) to said main power transmission gearbox (15), said aircraft (1) comprising a power plant (2) comprising at least one engine (3) driving said main power transmission gearbox (15), said aircraft (1) comprising a control means (8) for controlling said auxiliary rotor (7),
    **characterised in that** said aircraft (1) comprises a monitoring device according to any one of claims 11 to 13.

**Fig.1**

55
35
45
23
5;7
30
2
3
3
51
4
4
51
16
5;6
9
15
10
8
40
22
50
37
36
21
20
1

**Fig.2**

40;41
α
8

**Fig.3**

40;42
8

Fig.4

Fig.5

**EP 3 050 806 B1**

## RÉFÉRENCES CITÉES DANS LA DESCRIPTION

**Documents brevets cités dans la description**

- FR 2278576
- FR 2541725
- US 5775090 A
- EP 1310646 A
- EP 2749496 A